Europäisches Patentamt

European Patent Office

Office européen des brevets

(11) Publication number: **0 071 072**
**B1**

# (12) EUROPEAN PATENT SPECIFICATION

(45) Date of publication of patent specification: **27.12.85**

(21) Application number: **82106263.5**

(22) Date of filing: **13.07.82**

(51) Int. Cl.⁴: **F 02 B 75/32, F 16 J 1/10**

(54) Reciprocating piston internal combustion engine.

(30) Priority: **17.07.81 JP 110835/81**

(43) Date of publication of application:
**09.02.83 Bulletin 83/06**

(45) Publication of the grant of the patent:
**27.12.85 Bulletin 85/52**

(84) Designated Contracting States:
**DE FR GB**

(56) References cited:
**GB-A- 210 805**
**US-A-1 425 630**
**US-A-1 750 321**
**US-A-2 448 932**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Hayashi, Yoshimasa**
**No. 4-6-1, Yukinoshita**
**Kamakura City (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

Courier Press, Leamington Spa, England.

## Description

This invention relates generally to a reciprocating piston internal combustion engine provided with a measure for decreasing piston slap noise, and more particularly to a piston which is provided with means for thrusting the piston upon a major thrust side cylinder wall at a timing far before top dead center.

It is well known in the art, that piston slap noise is generated due to the lateral reciprocal movement of piston within an engine cylinder during compression and power strokes of a reciprocating piston internal combustion engine. In order to reduce such piston slap noise, a so-called piston pin offset has already been widely employed in which a piston pin is slightly offset from the center line of the piston. This reduces piston slap noise to some extent; however cannot reduce it to a desired low level, while raising a new problem in which the piston is moved in the direction to rotate around the piston rod.

US—A—2 448 932 discloses a piston for a reciprocating internal combustion engine, which is movably disposed within an engine cylinder. The piston comprises a connecting rod for connecting the piston with a crankshaft and an elastic means which is secured at its one end section onto said connecting rod and extends into the inside of said piston. On the other end section of said elastic means, a sliding member is secured, which is thrusted against and kept in sliding contact with the wall of the engine cylinder by the elasticity of said elastic means. US—A—2 448 932 further discloses that one end section of said elastic means is secured to the uppermost end of the connecting rod, so that if the connecting rod is in an upright position, the point on which the elastic means is secured to the end section of the connecting rod lies on a plane, which contains the piston pin and is perpendicular to the piston. The other end section of said elastic means is secured to a sliding member, which is thrust against the inner cylinder wall by the elasticity of said elastic means. Therefore, the force which thrusts said sliding member against the inner cylinder wall only depends on the elasticity of said elastic means. In US—A—2 448 932, it is disclosed to provide the elastic means in the form of a coil spring, whose central axis is located on the plane which includes the piston pin and is rectangular to the piston and in which the center of the sliding member is located. Therefore, during operation of the reciprocating internal combustion engine, the sliding member is always thrust with the same force against the inner cylinder wall because the angular displacment of the upper portion of the piston rod is only a minimum. Therefore, the thrust of the sliding member against the cylinder wall does not depend on the inclination angle of said connecting rod relative to the axis of the engine cylinder. This has the drawback that the sliding member is also thrusted against the cylinder wall under those conditions of the cylinder, in which such a thrust is not necessary. Therefore, said sliding member increases the friction between the piston and the cylinder.

GB—A—21 08 05 discloses a sliding member which is thrusted against the engine cylinder wall by means of a rigid lever member. This lever member thrusts the sliding member against the cylinder wall during the ascent movement of the piston. Such a rigid lever member has the drawback that the moving masses of the piston and the piston rod increase, with the consequence that the wear of the crankshaft bearings also increases, as well as the wear between the connecting rod and the piston pin. Such methods also bear the risk of damage of the connecting rod. The second drawback of the piston device disclosed in GB—A—21 08 05 is that the lever means thrusts the sliding member against the cylinder wall with the maximum force in those positions of the piston, in which the connecting rod is parallel to the cylinder axis, that is, the top dead center and the bottom dead center. This results in an increasing friction between the piston, the sliding member and the cylinder wall.

The technical problem underlying the invention is to provide a piston for a reciprocating piston internal combustion engine, which comprises a measure for decreasing piston slap noise, which is easy and economical to manufacture and which is reliable to operate.

According to the invention, the technical problem is solved in that the elastic means is in the form of a plate spring, which is secured at the middle portion of the connecting rod and thrusts the sliding member with an increasing force against the engine cylinder wall, as the inclination angle of said connecting rod relative to the axis of said engine cylinder decreases.

In accordance with the present invention, a reciprocating piston internal combustion engine comprises a piston movably disposed within an engine cylinder, and a connecting rod for connecting the piston with a crankshaft. An elongated elastic member is secured at its one end section onto a connecting rod and extends into the inside of said piston. Additionally, a sliding member or shoe is secured on the other end section of the elongated elastic member. The sliding member is thrusted against and kept in sliding-contact with the wall of the engine cylinder by virtue of the thrust forces exerted thereon. The thrust force increases as the inclination angle of the connecting rod relative to the axis of the engine cylinder decreases in accordance with the ascent movement of the piston. Therefore, the piston can be shifted from the minor thrust side cylinder wall to the major thrust side cylinder wall at a timing far before top dead center, thereby effectively reducing piston slap noise.

Brief Description of the Drawings

The features and advantages of the reciprocating piston internal combustion engine according to the present invention will be more clearly appreciated from the following description taken in conjunction with the accompanying drawings in which like reference numerals designate like parts and elements, and in which:

Figs. 1A and 1B are illustrations for explaining piston movements during compression and power strokes, respectively, in a conventional engine with piston pin offset;

Fig. 2 is a vertical sectional view of an essential part of a preferred embodiment of a reciprocating piston internal combustion engine in accordance with the present invention; and

Fig. 3 is a side elevation of the essential part of the engine of Fig. 2.

Detailed Description of the Invention

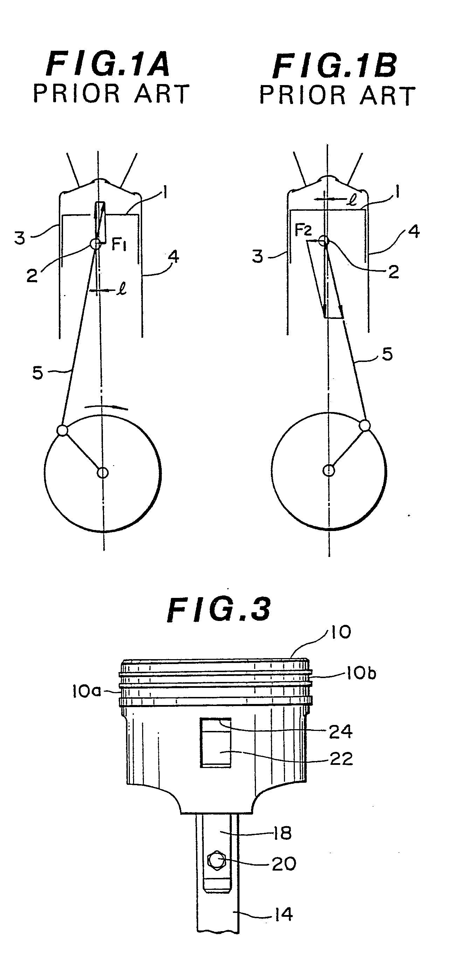

Referring to Figs. 1A and 1B, a conventional reciprocating piston internal combustion engine will be described along with its major shortcomings. In such an engine, at compression stroke as shown in Fig. 1A, a force $F_1$ acts on a piston 1 so that the piston 1 is thrusted rightward in the drawing. At power or expansion stroke, the piston 1 receives a force $F_2$ which acts leftward in the drawing since the inclination of a connecting rod 5 becomes reversed relative to that at the compression stroke. When the force acting on the piston 1 changes from $F_1$ to $F_2$, the piston 1 is moved from its right-most position (where the piston 1 is thrusted at its so-called minor thrust surface upon a minor thrust side cylinder wall 4) to its left-most position thus striking at its so-called major thrust surface against a major thrust side cylinder wall 3, thereby generating piston slap noise. It will be well known in the art, that such a piston slap noise is due to slap force which becomes higher as gas pressure within an engine cylinder increases.

In this regard, in order to decrease such piston slap noise, it has already been carried out to offset the location of a piston pin 2 toward the major thrust surface of the piston 1 relative to the cylinder center line by a predetermined distance l (for example, about 1 mm) as indicated in Figs. 1A and 1B, so that the piston 1 can be pressed against the major thrust side cylinder wall 3 as early as possible when it descends from top dead center.

However, even with such a conventional arrangement, piston slap noise has not been lowered to a desired level. Because, the conventional arrangement can offer a minor effect for very slightly advancing the top dead center of the piston relative to that of a crank system; and the transition of piston movement from the minor thrust side cylinder wall to the major thrust side cylinder wall unavoidably occurs at a position in close proximity to top dead center. Besides, since the piston pin is offset, the gas pressure applied to a piston crown generates a moment which causes the piston 1 to rotate around the piston pin, thus raising the lateral oscillation movement of the piston. This might cause piston crown and skirt section to strike against the cylinder wall, thereby forming a further noise source.

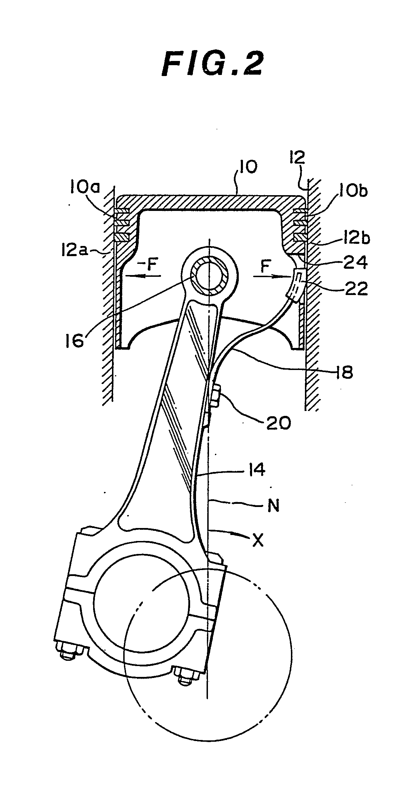

In view of the above description of the conventional reciprocating piston internal combustion engine, reference is now made to Figs. 2 and 3, wherein a preferred embodiment of a reciprocating piston internal combustion engine according to the present invention is illustrated. The engine comprises a piston 10 which is movably disposed within an engine cylinder 12. The piston 10 has a co-called major and minor thrust surfaces 10a, 10b which are located opposite to each other. The major thrust surface 10a is thrusted against a major thrust side cylinder wall 12a by a relatively major thrust at power or expansion stroke, whereas the minor thrust surface 10b is thrusted against a minor thrust side cylinder wall 12b by a relatively minor thrust at compression stroke.

A connecting rod 14 is provided to connect the piston 10 with a crankshaft (not shown). Accordingly, the small end of the connecting rod 14 is mounted on a piston pin 16 supported by the piston 10, and the large end of the connecting rod 14 is mounted on the crankshaft.

An elongated elastic member 18 in the form of a plate spring is secured at its one end section onto the surface of the connecting rod 14 by means of a bolt 20 which surface is located opposite to the minor thrust side cylinder wall 12b. The elongated elastic member 18 is made, for example, of spring steel and extends upwardly into the inside of the piston 10 or of the cylindrical section 10c of the piston 10. Disposed at the other end or free end of the elongated elastic member 18 is a sliding member or shoe 22 which is made of aluminium alloy, copper alloy or the like. The sliding member 22 is formed by casting and secured to the elongated elastic member 18 by means of bolt-connection, caulking or the like.

As best shown in Fig. 3, the piston 10 is formed at its cylindrical section 10c with an opening or window 24 through which the sliding member 22 projects out of the piston 10 and is brought into contact with the minor thrust side cylinder wall 12b. Accordingly, the window 24 opens at the minor thrust surface 10b of the piston 10. In this connection, the window 24 has such a size that the sliding member 22 does not contact the periphery of the window 24 even upon the relative movement between the piston 10 and the connecting rod 14. Thus, the sliding member 22 is effectively thrusted against and brought into sliding-contact with the minor thrust side cylinder wall 12b by the elasticity of the elongated elastic member 18.

The manner of operation of the above-mentioned arrangement will be discussed hereinafter.

During operation of the engine, the sliding member 22 supported by the connecting rod 14 is thrusted against the minor thrust side cylinder wall 12b with a thrust force F and slides upwardly and downwardly on the surface of minor thrust side wall 12b. The thrust force F, in turn, acts as a reaction force −F through the connecting rod 14 and the piston pin 16 onto the piston 10.

When the piston 10 ascends to approach the top dead center by the rotation of the crankshaft in the direction of X in Fig. 2, the inclination angle of the connecting rod 14 relative to the axis N of the engine cylinder 12 decreases to increase the thrust force F and accordingly the reaction force −F. Otherwise, the force (corresponding to $F_1$ in Fig. 1A) exerted to thrust the piston 10 against the minor thrust side cylinder wall 12b decreases as the piston 10 approaches the top dead center.

As a result, when the force F becomes larger than the force (corresponding to $F_1$), the piston 10 is shifted from the minor thrust side cylinder wall 12b to the major thrust side cylinder wall 12a. Thus, the piston 10 can be thrusted against the major thrust side cylinder wall 12a before gas pressure exerted on the crown of the piston 10 has not yet been higher. This effectively reduces piston slap noise, thereby reducing total engine noise.

Furthermore, according to the present invention, it is possible to arrange the axis of the piston pin 16 to intersect the engine cylinder axis without so-called piston pin offset, and therefore forces caused by gas pressure are balanced with each other during two rotations of the piston pin 16. This suppresses to the minimum the possibility of causing the lateral oscillation movement of the piston 10, thereby effectively preventing piston crown periphery and piston skirt from unusual striking against the cylinder wall, thus contributing to further noise reduction. Additionally, the piston 10 and cylinder 12 are effectively prevented from wear, thereby improving durability of the engine. Moreover, unnecessary friction between the piston 10 and the cylinder 12 can be reduced and therefore fuel economy can be improved.

It is preferable to so arrange that the upper section of the sliding member 22 strikes against the upper periphery of the window 24 at a timing slightly before top dead center, by which the curvature of the elastic member 18 increases to develop a further larger force to thrust the sliding member against the cylinder wall, thereby enhancing the assistance to the movement of the piston 10 against the major thrust side cylinder wall 12a.

As will be appreciated from the above, according to the present invention, the piston can be shifted from the minor thrust side cylinder wall to the major thrust side cylinder wall at a timing far before the top dead center. Therefore, the slap force of the piston can be greatly decreased, thereby effectively reducing piston slap noise. Additionally, since it is unnecessary to employ the above-mentioned piston pin offset, the piston can be prevented from its unusual striking against the cylinder wall.

## Claims

1. As reciprocating piston internal combustion engine, comprising:
a piston (10) movably disposed within an engine cylinder (12);
a connecting rod (14) for connecting said piston (10) with a crankshaft;
an elastic means (18) secured at its one end section onto said connecting rod (14) and extending into the inside of said piston (10);
a sliding member (22) secured on the other end section of said elastic means (18), said sliding member being thrusted against and kept in sliding contact with the wall of said engine cylinder by the elasticity of said elastic means (18)
characterised in that the elastic means (18) is in the form of a plate spring which is secured at the middle portion of said connecting rod and which is thrusting the sliding member (22) with an increasing force against the engine cylinder wall, as the inclination angle of said connecting rod (14) relative to the axis (N) of said engine cylinder decreases.

2. A reciprocating piston internal combustion engine as claimed in Claim 1, wherein said sliding member (22) is in sliding-contact with the engine cylinder wall (12b) at the minor thrust side to which cylinder wall the minor thrust surface of said piston (10) is capable of being thrusted. (Figs. 2 and 3)

3. A reciprocating piston internal combustion engine as claimed in Claim 2, wherein said elongated elastic member (18) is secured onto said connecting rod (14) at the side which is located opposite to the minor thrust side cylinder wall (12b). (Figs. 2 and 3)

4. A reciprocating piston internal combustion engine as claimed in Claim 3, wherein said piston (10) has a cylindrical wall section (10c) which is formed with an opening (24) located at the minor thrust surface (10b), in which said sliding member (22) projects out of said piston cylindrical wall section (10c) through said opening (24) and is in sliding-contact with the minor thrust side cylinder wall (12b). (Figs. 2 and 3)

5. A reciprocating piston internal combustion engine as claimed in Claim 1, wherein said sliding member (22) is made of a material selected from the group consisting of aluminium alloy and copper alloy. (Figs. 2 and 3)

6. A reciprocating piston internal combustion engine as claimed in Claim 4, wherein said opening (24) of said piston cylindrical wall section (10) is in such a size as to prevent said sliding member (22) from striking against the periphery of said opening (24) in spite of the relative movement between said piston (10) and said connecting rod (14). (Figs. 2 and 3)

7. A reciprocating piston internal combustion engine as claimed in Claim 4, wherein said opening (24) of said piston cylindrical wall section (10c) is so formed that said sliding member (22) strikes against the upper periphery of said opening at a timing slightly before top dead center. (Figs. 2 and 3)

## Revendications

1. Moteur à combustion interne à piston alternatif comprenant:

un piston (10) disposé mobile dans un cylindre (12) du moteur;

une tige de connexion (14) pur connecter ledit piston (10) à un vilebrequin;

un moyen élastique (18) fixé à sa première section extrême sur ladite tige de connexion (14) et s'étendant à l'intérieur dudit piston (10);

un organe coulissant (22) fixé à l'autre section extrême dudit moyen élastique (18), ledit organe coulissant étant poussé contre et maintenue en contact coulissant avec la paroi dudit cylindre du moteur par l'élasticité dudit moyen élastique (18);

caractérisé en ce que

le moyen élastique (18) a la forme d'un ressort plat qui est fixé à la partie médiane de ladite tige de connexion et qui pousse l'organe coulissant (22) avec une force croissante contre la paroi du cylindre du moteur, tandis que l'angle d'inclinaison de ladite tige de connexion (14) par rapport à l'axe (N) dudit cylindre du moteur diminue.

2. Moteur à combustion interne à piston alternatif selon la revendication 1 où ledit organe coulissant (22) est en contact coulissant avec la paroi (12b) du cylindre du moteur sur le côté poussée mineure, paroi du cylindre vers laquelle la surface de poussée mineure dudit piston (10) peut être poussée (figures 2 et 3).

3. Moteur à combustion interne à piston alternatif sleon la revendication 2 où ledit organe élastique allongé (18) est fixé sur ladite tige de connexion (14) du côté qui fait face à la paroi du cylindre (12b) côté poussée mineure (figures 2 et 3).

4. Moteur à combustion interne à piston alternatif selon la revendication 3 où ledit piston (10) a une section de paroi cylindrique (10c) qui présente une ouverture (24) placée sur la surface de poussée mineure (10b), où ledit organe coulissant (22) fait saillie hors de ladite section (10c) de paroi cylindrique du piston à travers ladite ouverture (24) et est en contact coulissant avec la paroi (12b) du cylindre côté poussée mineure (figures 2 et 3).

5. Moteur à combustion interne à piston alternatif selon la revendication 1 où ledit organe coulissant (22) est fait en un matériau choisi dans le groupe consistant·en un alliage d'aluminium et un alliage de cuivre (figures 2 et 3).

6. Moteur à combustion interne à piston alternatif selon la revendication 4 où ladite ouverture (24) de ladite section (10) de paroi cylindrique du piston est à une dimension telle que cela empêche ledit organe coulissant (22) de frapper le pourtour de ladite ouverture (24) malgré le mouvement relatif entre ledit piston (10) et ladite tige de connexion (14) (figures 2 et 3).

7. Moteur à combustion interne à piston alternatif selon la revendication 4 où ladite ouverture (24) de ladite section de paroi cylindrique du piston (10c) est formée de façon que ledit organe coulissant (22) frappe contre le pourtour supérieur de ladite ouverture en un temps légèrement avant le point mort haut (figures 2 et 3).

**Patentansprüche**

1. Hubkolben-Brennkraftmaschine mit:

einem Kolben (10), welcher bewegbar in einem Zylinder (12) der Maschine angeordnet ist;

einer Pleuelstange (14) zur Verbundung des Kolbens (10) mit einer Kurbelwelle;

einer elastischen Einrichtung (18), welche an ihrem einen Ende an der Pleuelstange (14) befestigt ist und sich in das Innere des Kolbens (10) erstreckt;

einem Gleitteil (22), welches an dem anderen Ende der elastischen Einrichtung (18) befestigt ist, wobei das Gleitteil durch die Elastizität der elastischen Einrichtung (18) gegen die Wandung des Zylinders der Brennkraftmaschine gedrückt und mit dieser in Gleitkontakt gehalten wird;

dadurch gekennzeichnet, daß die elastische Einrichtung (18) in form einer Plattenfeder ausgebildet ist, welche an dem mittleren Bereich der Pleuelstange befestigt ist und welche das Gleitteil (22) mit einer ansteigenden Kraft gegen die Wandung des Zylinders der Brennkraftmaschine drückt, wenn der Neigungswinkel der Pleuelstange (14) relativ zu der Achse (N) des Zylinders der Brennkraftmaschine abnimmt.

2. Hubkolben-Brennkraftmaschine nach Anspruch 1, bei welcher das Gleitteil (22) sich auf der Minderdruckseite der Wandung des Zylinders, gegen welche die Minderdruckfläche des Kolbens (10) gedrückt werden kann, in Gleitkontakt mit der Wandung (12b) des Zylinders der Brennkraftmaschine ist (Fig. 2 und 3).

3. Hubkolben-Brennkraftmaschine nach Anspruch 2, bei welcher das längliche elastische Bauteil (18) auf der Seite an der Pleuelstange (14) befistigt ist, welche der Minderdruckseite der Wandung (12b) des Zylinders gegenüberliegt (Fig. 2 und 3).

4. Hubkolben-Brennkraftmaschine nach Anspruch 3, bei welcher der Kolben (10) einen zylindrischen Wandbereich (10c) aufweist, welcher mit einer Öffnung (24) versehen ist, die an der Minderdruckfläche (10b) angeordnet ist, wobei das Gleitteil (22) durch die Öffnung (24) aus dem zylindrischen Wandbereich (10c) des Kolbens hervorsteht und sich in Gleitkontakt mit der Minderdruckseite der Wandung (12b) des Zylinders befindet (Fig. 2 und 3).

5. Hubkolben-Brennkraftmaschine nach Anspruch 1, bei welcher das Gleitteil (22) aus einem Material gefertigt ist, welches aus der aus Aluminiumlegierungen und Kupferlegierungen bestehenden Gruppe ausgewählt ist (Fig. 2 und 3).

6. Hubkolben-Brennkraftmaschine nach Anspruch 4, bei welcher die Öffnung (24) des zylindrischen Wandbereichs (10) des Kolbens so bemessen ist, daß bei einer Relativbewegung zwischen dem Kolben (10) und der Pleuelstange (14) ein Anstoßen des Gleitteils (22) gegen den Umfang der Öffnung (24) verhindertwird (Fig. 2 und 3).

7. Hubkolben-Brennkraftmaschine nach Anspruch 4, bei welcher die Öffnung (24) des zylindrischen Wandbereichs (10c) des Kolbens so ausgebildet ist, daß das Gleitteil (22) zu einem Zeitpunkt kurz vor dem oberen Totpunkt gegen den oberen Umfang der Öffnung stößt (Fig. 2 und 3).

# FIG.1A
## PRIOR ART

# FIG.1B
## PRIOR ART

# FIG.3

# FIG.2